Europäisches Patentamt

European Patent Office

Office européen des brevets

(19)

(11) Publication number: **0 324 896 B1**

# EUROPEAN PATENT SPECIFICATION

(12)

(45) Date of publication of patent specification: **30.12.92**

(51) Int. Cl.5: **G01B 11/06**

(21) Application number: **88116769.6**

(22) Date of filing: **10.10.88**

(54) **Thickness measuring method.**

(30) Priority: **19.01.88 JP 9974/88**

(43) Date of publication of application:
**26.07.89 Bulletin 89/30**

(45) Publication of the grant of the patent:
**30.12.92 Bulletin 92/53**

(84) Designated Contracting States:
**DE FR GB SE**

(56) References cited:
**EP-A- 0 211 654**
**EP-A- 0 243 961**
**GB-A- 2 072 840**

(73) Proprietor: **MITSUBISHI DENKI KABUSHIKI KAISHA**
**2-3, Marunouchi 2-chome Chiyoda-ku Tokyo(JP)**

(72) Inventor: **Tokumaru, Makoto**
**1-1 Tsukaguchihonmachi 8-chome Amagasaki Hyogo(JP)**
Inventor: **Nagao, Tosisige**
**1-1 Tsukaguchihonmachi 8-chome Amagasaki Hyogo(JP)**
Inventor: **Ariki, Masayuki**
**1-1 Tsukaguchihonmachi 8-chome Amagasaki Hyogo(JP)**
Inventor: **Nakano, Hideki**
**1-1 Tsukaguchihonmachi 8-chome Amagasaki Hyogo(JP)**

(74) Representative: **Ritter und Edler von Fischern, Bernhard,Dipl.-Ing. et al**
**HOFFMANN - EITLE & PARTNER Arabellastrasse 4**
**W-8000 München 81(DE)**

EP 0 324 896 B1

**Description**

## BACKGROUND OF THE INVENTION

The present invention relates to a method of measuring a thickness of thin sheet such as magnetic recording tape by means of laser beam.

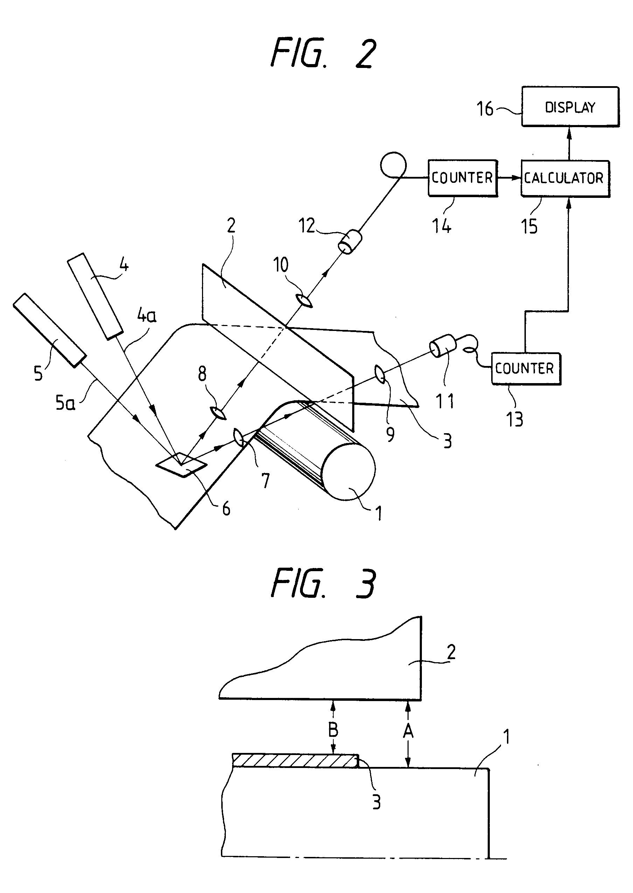

Fig. 2 illustrates a conventional measuring system for measuring a thickness of thin membrane which is disclosed in Japanese Patent Application Laid-open No. 174609/1985. In Fig. 2, a rotary shaft 1 is rotated at a constant speed. A optical shiedling plate 2 is disposed in parallel to the rotary shaft 1 with a predetermined gap therebetween. A sheet 3 whose thickness is to be measured is arranged in intimate contact with the rotary shaft 1 and moved at the same speed as that of the rotary shaft 1. Laser devices 4 and 5 are arranged to emit laser beams 4a and 5a at an angle with respect to each other. The laser beams 4a and 5a are directed to a reflection mirror 6 which is controlled to scan a gap A between a surface of the rotary shaft 1 and a lower edge of the optical shielding plate 2 with the laser beam 4a and a gap B between a surface of the sheet material 3 and the lower edge of the shielding plate 3 with the laser beam 5a through condenser lenses 7 and 8, respectively, as shown in Fig. 3 which shows the gaps A and B in an enlarged scale.

The scanning beams 4a and 5a are received through condensing lenses 9 and 10 by receivers 11 and 12 whose output pulses the numbers of which are proportional to the gaps are counted by counters 13 and 14, respectively. Outputs of the counters 13 and 14 are supplied to a calculator 15 output of which is displayed on the display device 16.

As shown in Fig. 3, the scanning beams 4a and 5a are condensed by the condenser lenses 7 and 8 such that their diameters become minimum in the respective gaps A and B and the reflection mirror 6 is controlled such that the respective beams scan the gaps vertically to the rotary shaft 1, so that the receivers 11 and 12 can receive the beams when they are in the gaps A and B, respectively.

Thus, the outputs of the receivers 11 and 12 take in the form of pulses, respectively, widths of which are proportional to the gaps A and B. The respective counters 13 and 14 count suitable clock pulses during the respective output pulses and the calculator 15 processes the outputs of the counters 13 and 14 to obtain widths of the gaps A and B, which are displayed on the display device 16. The thickness $t_x$ of the sheet material 3 can be represented by the following equation:

$$t_x = t_0 (1-b/a) \qquad (1)$$

where a is the number of counts in the counter 13, b is the number of counts in the counter 14 and $t_0$ is a width of the gap A.

In such conventional system, a thickness distribution over a full width of the sheet material cannot be measured. An example of a similar system is shown in EP A 0211 654.

## SUMMARY OF THE INVENTION

An object of the present invention is to provide a method of measuring thickness distributions in a width and a longitudinal directions of a thin sheet material with high accuracy.

According to the present invention, there is provided a method of measuring thickness of a thin sheet, comprising the steps of:

obtaining first gap information and storing said first gap information by scanning with a laser beam across an elongate gap between a rotary shaft and an optical shielding plate disposed above said rotary shaft, the longitudinal axis of said gap being substantially parallel to the longitudinal axis of said rotary shaft;

scanning across a second elongate gap between said optical shielding plate and the thin sheet disposed on said rotary shaft in intimate contact therewith to obtain second gap information;

characterized by:

displacing the scanning position of said laser beam parallel to the longitudinal axis of each gap during the steps of obtaining said first and said second gap information, said gap information being related to respective scanning positions along said gap; and

processing said first and second gap information to obtain a thickness distribution of the sheet in its width direction.

A preferred embodiment involves shifting a measuring point along a rotary shaft in synchronism with a rotation thereof while taking a variation of gap between the rotary shaft and an optical shielding plate along an axis of the rotary shaft due to deformation and/or eccentricity of the latter into consideration. The invention will now be described by way of example with reference to the drawings.

## BRIEF DESCRIPTION OF THE DRAWINGS

Fig. 1 illustrates a device for practicing an embodiment of the present method;

Fig. 2 illustrates an example of a conventional thickness measuring system; and

Fig. 3 shows gaps considered in the conventional system.

## DETAILED DESCRIPTION OF THE PREFERRED EMBODIMENT

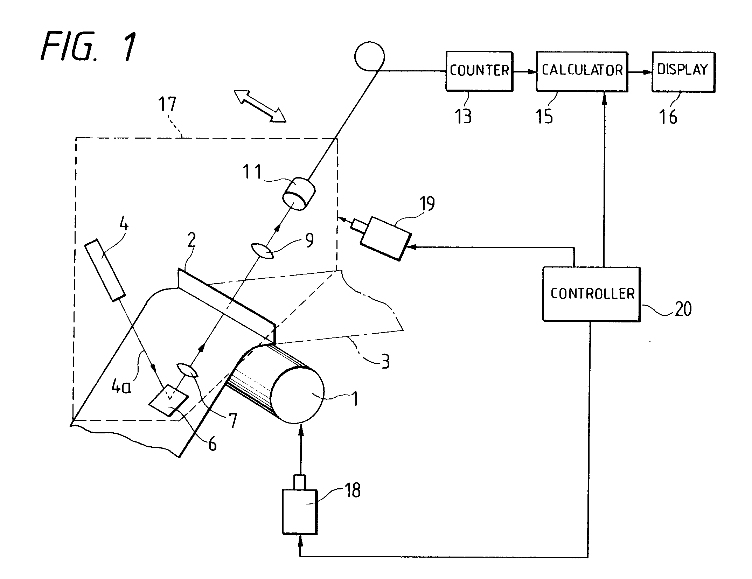

In Fig. 1, reference numerals 1 to 4, 4a and 6 to 16 depict the same components as those used in the conventional system, respectively.

A reference numeral 17 depicts a head portion which includes a laser device 4, a reflection mirror 6 for reflecting an output laser beam 4a through a condenser lens 7 to a gap between a rotary shaft 1 and an optical shielding plate 2 and a receiver 11 for receiving the beam 4a through a condenser lens 9 and is reciprocally movable along an axis of a rotary shaft 1 which is driven at a constant speed by a first servo motor 18 under a control of a controller 20. A second servo motor 19 is controlled by a control signal from the controller 20 to drive the head portion 17 at a predetermined speed along the rotary shaft 1. The controller 20 also functions to provide a positional information of the head portion 17 along the shaft 1 to a calculator 15.

In operation, the laser beam 4a from the laser device 4 is directed to the reflection mirror 6 and reflected beam, after condensed by the condenser lens 7, is directed to the gap between the shielding plate 2 and a sheet material 3 to be measured in thickness to scan it vertically. The receiver 11 receives the laser beam only during it is within the gap and provides an output signal in the form of a pulse having width proportional to the gap. The counter 13 counts suitable clocks during the output signal on which the calculator 15 calculates a thickness of the sheet material in the same manner as described with respect to the conventional system, which is displayed on the display device 16.

According to the present invention, a count number $a_0$ (x) representative of a gap width between the shielding plate 2 and the rotary shaft 1 having no sheet material at a position x along the rotary shaft 1 is measured to know a variation of gap along the rotary shaft and a measured count is stored in the calculator 15 prior to the above mentioned thickness measurement. That is, the servo motor 18 drives the rotary shaft 1 at the constant speed according to the control signal from the controller 20 and the second servo motor 19 drives the head portion 17 along the rotary shaft 1 in synchronism with the rotary shaft 1. The position x of the head portion 17 along the rotary shaft 1 is sent from the controller 20 to the calculator 15 in which it is correlated to a count number $a_0$ to obtain $a_0$ (x) and the latter for full width of the rotary shaft 1 is obtained while the head portion 17 reciprocates once and is stored therein.

In this case, it is preferrable that the count number for a position x is obtained twice, one $a_0(x)$ in one moving direction of the head portion 17 and the other $a_0(x')$ in the other moving direction and both count numbers for the position x are stored separately. This is because there may be a difference in laser scanning position between the opposite moving directions of the head portion 17 even if the physical position is a single.

Then, the sheet 3 to be measured on thickness is put on the rotary shaft 1 in intimate contact therewith and the thickness measurement is performed in the similar manner as mentioned previously. That is, a count number $a_f$ (x) representative of the gap width between the shielding plate 2 and the sheet 3 is obtained for a position x of the head portion 17 while reciprocating the head portion 17 along the rotary shaft 1 and it is sent to the calculator 15. In the calculator 15, a thickness F of the sheet 3 can be obtained on the basis of $a_f$ (x) and the previously obtained $a_0$ (x) according to the following equation:

$$F = K ( a_0 (x) - a_f (x))  \qquad (2)$$

where K is a constant indicative of a relation between the count number and the thickness.

Thus, it becomes possible to measure thickness distributions of a sheet in width and length directions without influences of deformation and/or eccentricity of the rotary shaft.

Although in the described embodiment the head portion 17 is moved along the rotary shaft 1, any of other mechanisms which is capable of scanning the gap in horizontal direction can be used instead thereof. Alternatively, it is possible to use a stationary laser device by guiding laser beam therefrom to the gap by means of horizontally arranged optical fibres and a suitable switching means for successively switching the optical fibers.

As described, according to the present invention, it becomes possible to measure, precisely, thickness distributions of a thin sheet in its width and length directions by shifting a measuring point along a rotary shaft in synchronism with a rotation thereof while taking a variation of gap between the rotary shaft and an optical shielding plate along an axis of the rotary shaft due to deformation and/or eccentricity of the latter into consideration.

## Claims

1. A method of measuring thickness of a thin sheet (3), comprising the steps of;

   obtaining first gap information and storing said first gap information (A) by scanning with a laser beam (4,5a) across an elongate gap between a rotary shaft (1) and an optical shielding plate (2) disposed above said rotary shaft, the longitudinal axis of said gap being substantially parallel to the longitudinal axis of said rotary shaft; and

   scanning across a second elongate gap between said optical shielding plate and the thin sheet disposed on said rotary shaft in intimate contact therewith to obtain second gap information (B);

characterized by:

displacing the scanning position of said laser beam parallel to the longitudinal axis of each gap during the steps of obtaining said first and said second gap information, said gap information being related to respective scanning positions along said gap; and

processing said first and second gap information to obtain a thickness distribution of the sheet in its width direction.

2. The method as claimed in claim 1, wherein said first and second gap information is obtained while said rotary shaft is rotating at a constant speed.

3. The method as claimed in claim 1 or 2, wherein said scanning position is reciprocated along said rotary shaft.

4. The method as claimed in any preceding claim wherein a rate of displacement of said laser beam parallel to the longitudinal axis of each gap is synchronized with a rate of rotation of said rotary shaft.

**Patentansprüche**

1. Verfahren zum Messen einer Dicke einer dünnen Schicht (3), umfassend die folgenden Schritte:

Erhalten von erster Spaltinformation und Speichern der ersten Spaltinformation (A) durch Abtasten mit einem Laserstrahl (4, 5a) über einem Längsspalt zwischen einer Drehwelle (1) und einer optischen Abschirmplatte (2), die sich über der Drehwelle befindet, wobei die Längsachse des Spaltes im wesentlichen parallel zu der Längsachse der Drehwelle verläuft; und

Abtasten über einen zweiten Längsspalt zwischen der optischen Abschirmplatte und der dünnen Schicht, die sich auf der Drehwelle in engem Kontakt damit befindet, um zweite Spaltinformation zu erhalten;

**gekennzeichnet** durch:

Verschieben der Abtastposition des Laserstrahls parallel zu der Längsachse jedes Spaltes während der Schritte vom Erhalten der ersten und zweiten Spaltinformation, wobei sich die Spaltinformation auf jeweilige Abtastpositionen entlang des Spaltes bezieht; und Verarbeiten der ersten und zweiten Spaltinformation, um eine Dickenverteilung der Schicht in ihrer Breitenrichtung zu erhalten.

2. Verfahren nach Anspruch 1, dadurch **gekennzeichnet,** daß die erste und zweite Spaltinformation erhalten wird, während sich die Drehwelle mit konstanter Geschwindigkeit dreht.

3. Verfahren nach Anspruch 1 oder 2, dadurch **gekennzeichnet,** daß die Abtastposition entlang der Drehwelle hin- und herbewegt wird.

4. Verfahren nach einem der vorhergehenden Ansprüche, dadurch **gekennzeichnet,** daß eine Verschiebungsrate des Laserstrahls parallel zu der Längsachse jedes Spalts mit einer Umdrehungsrate der Drehwelle synchronisiert ist.

**Revendications**

1. Procédé de mesure de l'épaisseur d'une feuille mince (7) comportant les étapes qui consistent :

à obtenir une première information de largeur d'espace et à stocker ladite première information de largeur d'espace (A) en procédant à un balayage au moyen d'un faisceau laser (4, 5a) à travers un espace allongé situé entre un arbre rotatif (1) et une plaque écran optique (2) disposée au-dessus dudit arbre rotatif, l'axe longitudinal dudit espace étant sensiblement parallèle à l'axe longitudinal dudit arbre rotatif ; et

à procéder à un balayage à travers un deuxième espace allongé situé entre ladite plaque écran optique et ladite feuille mince disposée sur l'arbre rotatif en contact étroit avec ce dernier pour obtenir une deuxième information de largeur d'espace (B);

caractérisé par :

le déplacement de la position de balayage dudit faisceau laser parallèlement à l'axe longitudinal de chaque espace au cours des étapes pendant lesquelles on collecte lesdites première et deuxième informations de largeur d'espace, lesdites informations de largeur d'espace étant liées aux positions de balayage respectives le long dudit espace ; et par

le traitement desdites première et deuxième informations de largeur d'espace afin d'obtenir une distribution de l'épaisseur de la feuille dans le sens de sa largeur.

2. Procédé selon la revendication 1, dans lequel lesdites première et deuxième informations de largeur d'espace sont obtenues pendant la rotation de l'arbre rotatif à vitesse constante.

3.  Procédé selon les revendications 1 ou 2, dans lequel ladite position de balayage est soumise à un mouvement de va-et-vient le long dudit arbre rotatif.

4.  Procédé selon l'une quelconque des revendications précédentes, suivant lequel un rythme de déplacement dudit faisceau laser parallèlement à l'axe longitudinal de chaque espace est synchronisé avec le rythme de rotation dudit arbre rotatif.

**FIG. 1**

COUNTER — 13

CALCULATOR — 15

DISPLAY — 16

CONTROLLER — 20

EP 0 324 896 B1

# FIG. 2

DISPLAY 16

COUNTER 14 → CALCULATOR 15

12

COUNTER 13

2

4

4a

5

5a

10

8

9

11

3

7

6

1

# FIG. 3

2

B

A

3

1